# EUROPÄISCHE PATENTSCHRIFT

(11) **EP 4 115 021 B1**
(45) Veröffentlichungstag und Bekanntmachung des Hinweises auf die Patenterteilung: **16.07.2025**
(21) Anmeldenummer: 21711730.8
(22) Anmeldetag: 02.03.2021
(51) Int. Cl.: E02B 17/00, E02B 17/02, E02D 27/42, E02D 27/52, E04H 12/10, F03D 13/25

(54) **OFFSHORE-TRAGSTRUKTUR FÜR WINDENERGIEANLAGEN**
OFFSHORE SUPPORTING STRUCTURE FOR WIND TURBINES
STRUCTURE DE SUPPORT EN MER POUR ÉOLIENNES

(30) Priorität: 03.03.2020 DE 102020105620
(43) Veröffentlichungstag der Anmeldung: 11.01.2023
(73) Patentinhaber: thyssenkrupp Carbon2Chem GmbH, 45143 Essen (DE)
(72) Erfinder: REALES, Emilio Bertomeo, 27753 Delmenhorst (DE)
(74) Vertreter: thyssenkrupp Intellectual Property GmbH
(86) Internationale Anmeldenummer: PCT/DE2021/100210
(87) Internationale Veröffentlichungsnummer: WO 2021/175373

(56) Entgegenhaltungen:
- EP-A1- 3 056 611
- EP-A2- 2 067 914
- DE-A1- 102014 114 472
- DE-U1- 202012 005 538
- US-A1- 2017 321 659

## Beschreibung

Die Erfindung betrifft gemäß Oberbegriff des Anspruchs 1 eine Offshore-Tragstruktur für Windenergieanlagen, welche mit mehreren, vorzugsweise sechs im Meeresgrund verankerbaren Pfählen verbindbar ist, mit:
einer Aufnahme für einen Turm einer Windenergieanlage,
einer mit den Pfählen verbindbaren, aus einer Vielzahl von Rohren zusammengesetzten Fachwerksstruktur, welche aus mehreren vorgefertigten Fachwerks-Segmenten zusammensetzbar ist, wobei ein Segment mehrere mittels eines X-Knotens verbundene Rohre sowie mehrere im Wesentlichen im Betrieb horizontal angeordnete, einen Ring bildende Rohre aufweist, und wobei die Fachwerksstruktur mehrere Fußknoten aufweist, mittels derer die Fachwerksstruktur unmittelbar oder mittelbar mit den Pfählen koppelbar ist.

Derartige Tragstrukturen kommen insbesondere bei der Installation von Windenergieanlagen (WEA) in Offshore-Regionen mit großer Gewässertiefe zum Einsatz. Die Offshore-Windenergieanlagen und Tragstrukturen sind extremen Bedingungen ausgesetzt. Sie werden oft in 20 bis 60 Metern Meerestiefe mit Hilfe der Tragstruktur verankert. Die Tragstruktur ist hohen mechanischen und chemischen Belastungen ausgesetzt. Verschiedene Typen sind bekannt, beispielsweise Monopile-, Jacket-, Tripod-, Tripile- oder Bucket-Konstruktionen. Die vorliegende Erfindung betrifft in erster Linie eine sogenannte Jacket-Konstruktion. Diese ist eine Fachwerkkonstruktion aus stabförmigen Elementen, insbesondere verschweißten Stahl-Rohren. Derartige Offshore-Strukturen werden zum Beispiel in der EP 3 056 611 A1, DE 20 2012 005 538 U1 und EP 2 067 914 A1 beschrieben.

Fußknoten der Fachwerkstruktur sind im unteren Teil der Tragstruktur angeordnet und dienen der Verbindung der Rohre im unteren Bereich und der Übertragung der Gewichtskräfte in die Gründungs-Pfähle, welche im Meeresgrund verankert sind. Im Bereich der Fußknoten laufen die im Wesentlichen X-förmig angeordneten Rohre, welche mittels eines X-Knotens miteinander verbunden sind, einerseits und die einen Ring bildenden im Wesentlichen horizontal angeordneten Rohre zusammen. Mehrere mittels eines X-Knotens verbundene Rohre sind nachfolgend auch als X-Rohre bezeichnet. Von den Fußknoten wird eine Verbindung zu den Pfählen hergestellt. Diese kann unmittelbar vom Knoten oder auch unter Zwischenschaltung weiterer Verbindungselemente, insbesondere von Rohrsegmenten erfolgen.

Aufgrund größer werdender Windenergieanlagen steigen die an die Offshore-Tragstrukturen gestellten Anforderungen bezüglich deren Tragfähigkeit und Dauerbelastung. Außerdem ist unter Kostengesichtspunkten ein möglichst geringer Materialaufwand bei hoher Tragfähigkeit und guter Herstellbarkeit angestrebt. Wesentliche Teile der Tragstruktur sind aus Stahl gefertigt und werden durch eine Vielzahl von Schweißverbindungen zusammengefügt.

Mit größer werdenden Tragstrukturen für größere Windenergieanlagen werden auch die Fußknoten größer, um die erforderlichen Lasten aufnehmen und übertragen zu können. In der Praxis hat sich gezeigt, dass im Bereich der Fußknoten Schwierigkeiten auftreten durch die Vielzahl und Dichte oder Nähe der erforderlichen Schweißnähte relativ zueinander zum Verbinden der einzelnen Rohre oder Rohrsegmente. So müssen beispielsweise die X-Rohre und auch die einen Ring bildenden Rohre auf relativ engen Raum verschweißt werden. Schweißnähte stellen generell Schwachstellen dar. Im Bereich der Fußknoten sind diese im Bereich enorm großer Kräfte, denn die Gewichtskräfte sind im Bereich der Fußknoten maximal groß. Allein die Menge der Schweißungen ist eine Herausforderung, und eine relativ große Nähe verschiedener Schweißnähte kann zu Festigkeitsproblemen oder Materialschwächungen führen. Erschwert sind die Bedingungen auch dadurch, dass die Rohre in verschiedenen Winkeln zueinander angeordnet und im Bereich der Fußknoten befestigt werden müssen.

Es ist Aufgabe der vorliegenden Erfindung, eine Tragstruktur bereitzustellen sowie ein Verfahren anzugeben, welche die Nachteile des Standes der Technik wenigstens teilweise vermeidet und die großen, dynamischen Kräfte von einer Windenergieanlage mit geringem konstruktiven Aufwand vorzugsweise im unteren Bereich der sogenannten Fußnoten übertragen zu können. Ferner soll die Montage sowie Verschweißbarkeit insbesondere im Bereich der Fußknoten optimiert werden.

Die Aufgabe wird gelöst durch eine Offshore-Tragstruktur mit den Merkmalen des Anspruchs 1.

Erfindungsgemäß ist vorgesehen, dass ein Fußknoten ein im Betrieb unteres Rohrsegment sowie eine oben an dem Rohrsegment befestigte, vorzugsweise verschweißte Adapterplatte aufweist, welche im Betrieb mittelbar oder unmittelbar mit mindestens einem mittels eines X-Knotens verbundenen Rohr der Fachwerksstruktur koppelbar ist. Ein Fußknoten ist erfindungsgemäß im Wesentlichen, nicht notwendigerweise abschließend, durch die Adapterplatte und das darunter angeordnete untere Rohrsegment, welches auch als Fußrohr bezeichnet werden könnte, gebildet, an welchem die Rohre vorteilhaft befestigbar sind. Durch das Vorsehen eines - im Betrieb im Wesentlichen vertikal angeordneten - unteren Rohrsegments und einer in dessen oberen Bereich verschweißten (oder anders sicher befestigten) Adapterplatte lassen sich auf eine hohe Festigkeit aufweisende und gleichzeitig den Materialaufwand verringernde Weise die X-Rohre mit dem Fußknoten verbinden. Die X-Rohre, welche mittels eines X-Knotens der Fachwerkstruktur miteinander verbunden sind, lassen sich bei der Montage unmittelbar oder mittelbar - ggf. unter Zwischenschaltung weiterer Bauelemente - mit der Adapterplatte verbinden, insbesondere durch Schweißen.

Die Geometrie und Materialstärke der Adapterplatte und deren Abmessungen lassen sich auf günstige Art und Weise an die Größe der X-Rohre anpassen. Andererseits ist die Adapterplatte mit dem darunter angeordneten Rohrsegment verschweißt (oder anderweitig verbunden). Dieses Rohrsegment und die Adapterplatte lassen sich materialsparend von ihren Dimensionen her aufeinander abstimmen und entsprechend auslegen. Durch die Adapterplatte lässt sich eine Lastübertragung von den X-Rohren mittels des unteren Rohrsegmentes durch den Fußknoten bis zu den Pfählen herstellen. Durch geeignete Dimensionierung lassen sich die insgesamt erforderlichen Schweißnähte verringern. Auch lassen sich die Schweißverbindungen räumlich entzerren. Die gesamte Schweißarbeit kann reduziert werden, was Material und Zeitaufwand reduziert. Durch die Adapterplatte lassen sich insgesamt geringere Rohrdurchmesser insbesondere des unteren Rohrsegmentes verwirklichen. Angesichts der beachtlichen Dimensionen mit Längen des Fußknotens mit mehreren Metern hat dies einen erheblichen Materialspareffekt. Auch hat sich gezeigt, dass beispielsweise durch Fatigue-Berechnungen vorteilhafte Lastaufnahmen und Festigkeiten erreicht werden.

Des Weiteren ist erfindungsgemäß vorgesehen, dass an der Adapterplatte zwei im Wesentlichen V-förmig zueinander angeordnete Adapterrohre befestigt, vorzugsweise verschweißt sind, wobei jedes Adapterrohr mit einem (X-) Rohr der Fachwerksstruktur verbindbar, vorzugsweise verschweißbar ist. Mithilfe vorzugsweise zweier Adapterrohre, die an der Adapterplatte befestigt sind, lassen sich die X-Rohre auf besonders vorteilhafte Weise mit dem Fußknoten verbinden, insbesondere durch Schweißung. Die Adapterrohre können geometrisch an die Dimensionen der X-Rohre angepasst werden. Insgesamt verringert sich dadurch der Schweißaufwand. Ferner lassen sich die Schweißverbindungen zwischen Adapterrohren und X-Rohren und Adapterplatte auf einfacherer Weise sukzessive herstellen.

Zur Erhöhung der Festigkeit wird vorgeschlagen, dass zwischen den beiden V-förmigen Adapterrohren ein Knotenblech zur Versteifung angeordnet, vorzugsweise eingeschweißt ist.

Eine weitere bevorzugte Ausführungsform sieht vor, dass die Adapterplatte im Wesentlichen die Form einer Kreisschreibe aufweist, deren Durchmesser vorzugsweise größer ist als der Außendurchmesser des unteren Rohrsegments. So braucht nur der Durchmesser der Adapterplatte vergrößert zu werden, um eine einfache Verbindung zu den X-Rohren herstellen zu können, ohne dass es erforderlich wäre, den Durchmesser des unteren Rohrsegments zu vergrößern, welcher erhebliche Dimensionen aufweist, wodurch erfindungsgemäß Material eingespart werden kann, wenn dessen Durchmesser möglichst relativ klein bleiben kann.

Gemäß einer Weiterbildung dieser Ausführungsform wird vorgeschlagen, dass das untere Rohrsegment im Betrieb weiterhin verbunden, vorzugsweise verschweißt ist mit zwei im Wesentlichen horizontalen Rohren eines unteren Rings. Zweckmäßigerweise ist der Durchmesser des unteren Rohrsegments größer als der Durchmesser eines horizontalen Rohres der Fachwerksstruktur. So ist insgesamt eine robuste Fußknotenstruktur ausgebildet.

Gemäß einer bevorzugten Weiterbildung wird vorgeschlagen, dass der Fußknoten vollständig mit zwei V-förmig zueinander angeordneten horizontalen Rohren und mit der Adapterplatte und mittels der Adapterplatte mit zwei oberen V-förmigen Adapterrohren und mittels dieser mit zwei X-Rohren verschweißt ist.

Insgesamt lassen sich die Lasten günstig aufnehmen mit geringem Materialaufwand, wenn gemäß einer Weiterbildung vorgesehen ist, dass jedes Fachwerks-Segment sechs horizontale, einen Ring bildende Rohre sowie sechs X-förmige Rohrstrukturen aus jeweils zwei X-förmig zueinander angeordneten Rohren aufweist, wobei je nach erforderlicher Größe der Tragstruktur zwei, drei oder weitere Fachwerks-Segmente übereinander angeordnet werden können.

Gemäß einem weiteren Aspekt wird die Aufgabe gelöst durch ein Verfahren mit den Merkmalen des Anspruchs 9, also einem Verfahren zum Herstellen einer Offshore-Tragstruktur gemäß den vorstehenden Ansprüchen, wobei die Tragstruktur als aus einer Vielzahl von Rohren zusammengesetzten Fachwerksstruktur ausgebildet ist und ein Fußknoten ein unteres Rohrsegment und eine Adapterplatte sowie zwei V-förmig zueinander angeordnete Adapterrohre aufweist, bei dem die Adapterrohre mit ein X-bildenden Rohren der Fachwerksstruktur verschweißt werden. Dadurch, dass zunächst die X-Rohre mit den Adapterrohren verschweißt werden, lassen sich herstellungstechnische Vorteile erzielen. Vorzugsweise wird anschließend die Adapterplatte mit dem unteren Rohrsegment verschweißt. Der Fußknoten selbst wird vorteilhaft mit einem Pfahl mittels Schweißverbindung verbunden.

Weitere Merkmale und Vorteile der Erfindung ergeben sich aus den Unteransprüchen sowie der nachfolgenden Beschreibung bevorzugter Ausführungsbeispiele unter Bezugnahme auf die Zeichnungen. Es zeigen:
- Fig. 1: ein Ausführungsbeispiel einer erfindungsgemäßen Offshore-Tragstruktur mit erfindungsgemäßen Fußknoten in einer perspektivischen Ansicht;
- Figur 2: die Tragstruktur in einer Seitenansicht;
- Figur 3: ein Teil der Tragstruktur in einer perspektivischen Ansicht;
- Figur 4: ein Teil der Tragstruktur in einer Seitenansicht;
- Figur 5: die mehreren (sechs) Mittel Fußknoten im unteren Bereich der Tragstruktur oberhalb der Pfähle in einer perspektivischen Ansicht;
- Figur 6: ein Fußknoten in einer vergrößerten perspektivischen Ansicht; und
- Figur 7: der Fußknoten in einer perspektivischen Ansicht.

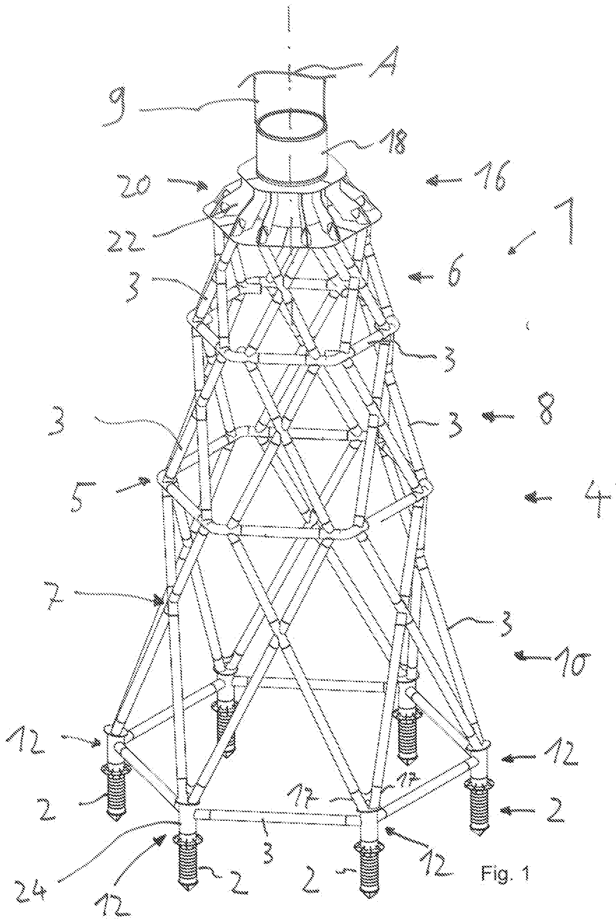

Ausweislich Fig. 1 weist die erfindungsgemäße Tragstruktur1 für Windenergieanlagen 9 (WEA) eine Fachwerksstruktur 4, die auch als Jacketabschnitt 4 bezeichnet werden kann, auf, welche eine Vielzahl von fachwerkartig miteinander verbundene Stäben, Streben im Ausführungsbeispiel vorzugsweise Rohren 3 umfasst.

Die Tragstruktur 1 mit einer im Betrieb im Wesentlichen vertikalen Längsachse A ist gemäß Figur 1 mittels sechs im Meeresgrund verankerbaren Pfählen 30 koppelbar. Mit den Pfählen 30 ist im montierten Zustand der untere Jacketabschnitt 4 verbunden. Er hat einen im Wesentlichen sechseckigen Querschnitt bezogen auf eine Längsachse A. Der Jacketabschnitt 4 ist im Wesentlichen sich von unten nach oben verjüngend ausgebildet und weist beispielsweise drei übereinander angeordnete Fachwerks-Segmente 6, 8, 10 auf, die koaxial zueinander angeordnet sind. Die Segmente 6, 8, 10 und Rohre 3 sind mittels Knoten 5, 7 miteinander verbunden sind. Der Knoten 5 ist als sogenannter abgerundeter Knoten bzw. "Rounded Node" ausgebildet; für Details zu diesem Knoten 5 wird insbesondere auf WO 2013/139816 A2 verwiesen, in der diese Knoten im Detail beschrieben sind. Zwei jeweils schräg angeordnete Rohre 3 bilden jeweils eine X- Form aus. Sie sind an einem Knoten 7 miteinander verbunden. Mehrere mittels eines X-Knotens 7 verbundene Rohre 3 sind nachfolgend auch als X-Rohre 3 bezeichnet.

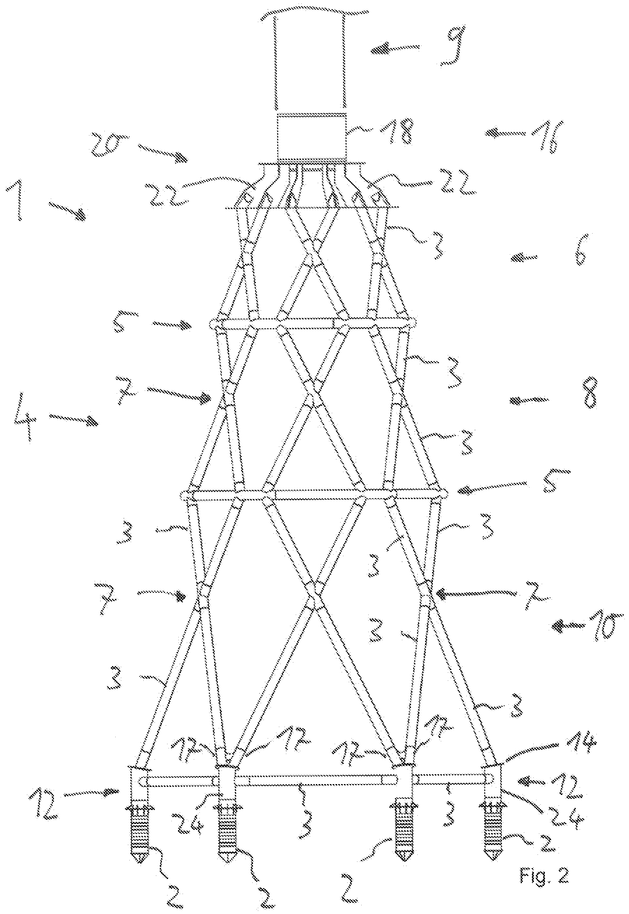

Der in Figur 2 exemplarisch gezeigte X-Knoten 7 schließt zwischen seinen Schenkeln je zwei spitze und zwei stumpfe Winkel ein und ist dazu eingerichtet, X-Rohre 3 miteinander zu verbinden. Die Rohre 3 sind dabei mittels des Knotens 7 derart miteinander verbunden, dass sie sämtlich im Wesentlichen in einer Ebene liegen. Sämtliche Knoten 5, 7 können alternativ oder vorzugsweise als Doppelrohrstrukturen ausgebildet sein. Die Rohre 3 sind vorzugsweise mittels Orbitalschweißen mit den Knoten 5, 7 verbunden.

In jedem Segment 6, 8, 10 sind insgesamt sechs X-förmige Gebilde aus jeweils zwei oder vier X-Rohren 3 angeordnet. Zwei benachbarte Segmente 6, 8, 10 sind mittels eines umlaufenden Ringes miteinander verbunden, wobei der Ring hier eine hexagonale Form aufweist aus benachbarten und miteinander verschweißten Rohren 3 gebildet ist, die im Betrieb im Wesentlichen horizontal angeordnet sind.

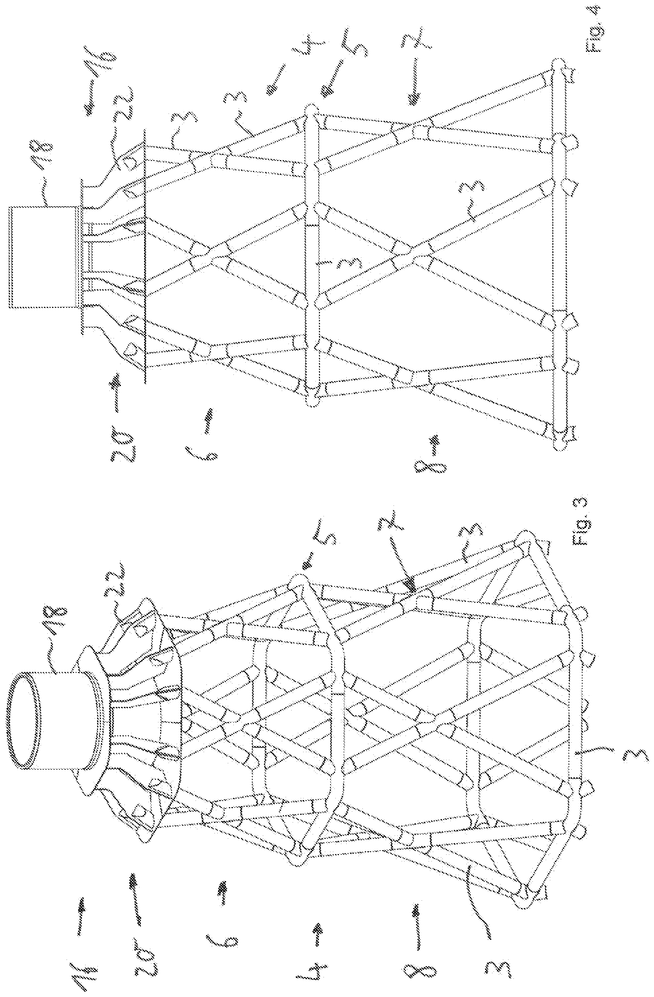

Wie insbesondere Figuren 1 bis 4 zeigen, ist oben an der Tragstruktur 1 als Schnittstelle eine Aufnahme 16 für einen Turm (nicht gezeigt) einer Windenergieanlage 9 (in Fig. 1 und 2 nur angedeutet) ein so genanntes Transition-Piece mit einem Transition-Piece-Rohr 18 angeordnet. Die Aufnahme 16 ist dazu mit den oberen Knoten des obersten Segments 6 verbunden. Rohr 18 weist eine Ausnehmung auf, welche sich entlang einer im Wesentlichen vertikalen Längsachse A erstreckt und zylindrisch ausgebildet ist. Ein Kraftübertragungsmodul 20 ist im Ausführungsbeispielen mit mehreren im Betrieb sich im Wesentlichen in vertikaler Richtung erstreckende Blechsegmenten 22 zur Übertragung von Kräften ausgebildet. Die mehreren Blechsegmente 22 sind ausgebildet und geeignet, Kräfte aufgrund der Lasten der Windenergieanlage nach unten in die Tragstruktur 2 zu übertragen und abzuleiten.

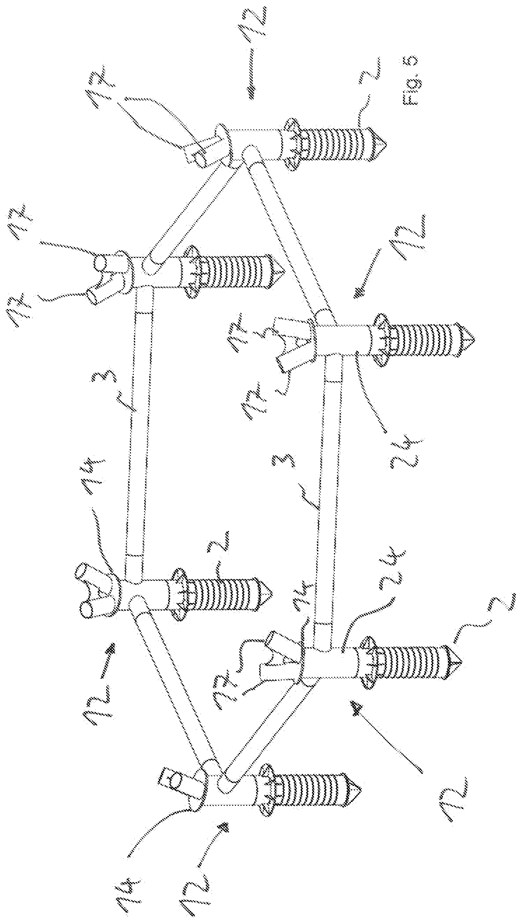

Ein Fußknoten 12 (vergrößert in Figuren 5 bis 7) ist dazu eingerichtet, vier Rohre 3 miteinander zu verbinden und stellt eine Schnittstelle zum Verbinden der Tragstruktur 2 mit den Pfählen 2 dar. Im Ausführungsbeispiel sind sechs Fußknoten 12 vorgesehen, jener Struktur kann eine andere Zahl zweckmäßig sein. Der Fußknoten 12 weist ein - im Betrieb unteres - Rohrsegment 24, welches auch als Fußrohr 24 bezeichnet werden kann, sowie eine oben an dem Rohrsegment 24 befestigte, vorzugsweise verschweißte Adapterplatte 14 auf, welche im Betrieb mittelbar oder unmittelbar mit mindestens einem mittels eines X-Knotens 7 verbundenen Rohr 3 der Fachwerksstruktur 4 koppelbar ist (siehe Fig. 2, 6 und 7).

An der Adapterplatte 14 ist mindestens ein Adapterrohr 17 bzw. sind im Ausführungsbeispiel vorzugsweise zwei im Wesentlichen V-förmig zueinander angeordnete Adapterrohre 17 befestigt, namentlich verschweißt, wobei jedes Adapterrohr 17 mit einem Rohr 3 der Fachwerksstruktur 4 verbindbar, vorzugsweise verschweißbar ist. Der Winkel der Adapterrohre 17 ist angepasst an den spitzen Winkel des X-Knotens 7 bzw. dem Verlauf der X-Rohre 3. Zwischen den beiden V-förmig angeordneten Adapterrohren 17 ist ein Knotenblech 19 zur Versteifung angeordnet, vorzugsweise eingeschweißt. Das Knotenblech 19 erweitert sich nach außen hin, um eine ausreichend lange Kontaktfläche und damit Länge der Schweißnaht bezüglich des Adapterrohres 17 herzustellen.

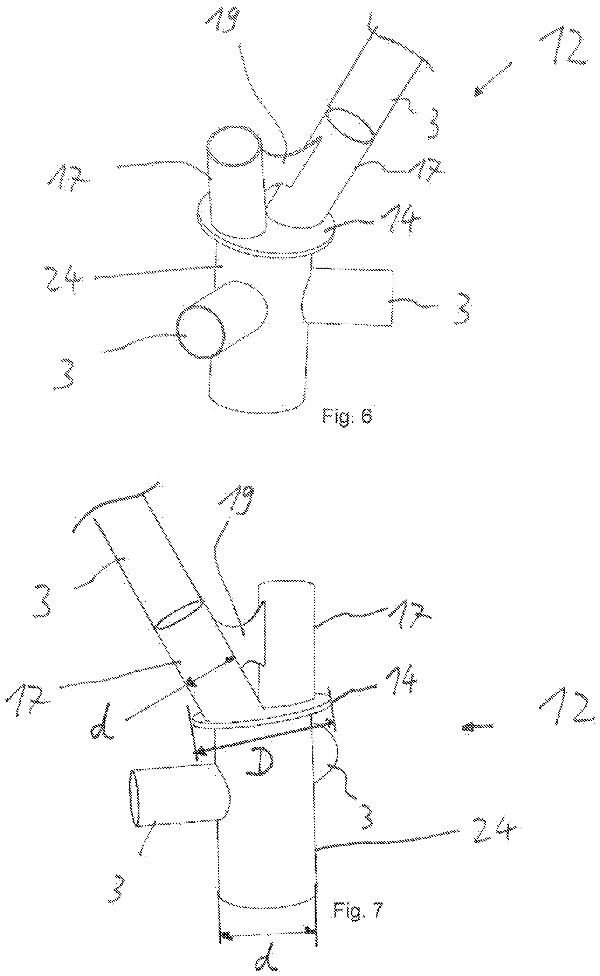

Die Adapterplatte 14 hat im Wesentlichen die Form einer Kreisschreibe, deren in Fig. 7 veranschaulichter Durchmesser D vorzugsweise größer ist als der Außendurchmesser d des unteren Rohrsegments 24 und auch deutlich größer ist als der Durchmesser d des X-Rohres 3. Das untere Rohrsegment 24 ist im montierten Zustand, also im Betrieb verbunden, vorzugsweise verschweißt mit zwei im Wesentlichen horizontalen Rohren 3, die einen unteren Ring bilden. Diese Schweißverbindung ist unterhalb der Adapterplatte 14 hergestellt. Durchmesser d des unteren Rohrsegments 24 ist größer ist als der Durchmesser d eines horizontalen Rohres 3 der Fachwerksstruktur 4. Es wird also erreicht, dass der Fußknoten 12 vollständig mit zwei V-förmig zueinander angeordneten horizontalen Rohren 3 und mit der Adapterplatte 14 und mittels der Adapterplatte 14 mit den zwei oberen V-förmigen Adapterrohren 117 und mittels dieser mit zwei X-Rohren 3 verschweißt ist. Nach unten hin wird erreicht, dass die Tragstruktur 1 mittels sechs Fußknoten 12 mit sechs Pfählen 2 mittels Schweißverbindung gekoppelt ist.

Zum Herstellen und Montieren der Offshore-Tragstruktur 1 der zuvor beschriebenen Art wird bevorzugt so vorgegangen, dass die Adapterrohre mit X-Rohren der Fachwerksstruktur 4 verschweißt werden. Dann wird die Adapterplatte 14 mit dem unteren Rohrsegment 24 verschweißt. Der Fußknoten 12 ist mit einem Pfahl 2 mittels Flansch- oder Schweißverbindung verbunden.

### Bezugszeichenliste

- 1: Offshore-Tragstruktur
- 2: Pfähle
- 3: Rohre
- 4: Fachwerksstruktur (Jacketabschnitt)
- 5, 7: Knoten
- 6,8,10: Fachwerks-Segmente
- 9: Windenergieanlage
- 12: Fußknoten
- 14: Adapterplatte
- 17: Adapterrohr
- 16: Aufnahme
- 19: Knotenblech
- 18: Transition-Piece-Rohr
- 20: Kraftübertragungsmodul
- 22: Blechsegment
- 24: Rohrsegment (Fußrohr)

## Patentansprüche

1. Offshore-Tragstruktur (1) für Windenergieanlagen, welche mit mehreren, vorzugsweise sechs im Meeresgrund verankerbaren Pfählen (2) verbindbar ist, mit:
einer Aufnahme für einen Turm einer Windenergieanlage,
einer mit den Pfählen (2) verbindbaren, aus einer Vielzahl von Rohren (3) zusammengesetzten Fachwerksstruktur (4), welche aus mehreren vorgefertigten Fachwerks-Segmenten (6, 8, 10) zusammensetzbar ist, wobei ein Segment (6, 8, 10) mehrere mittels eines X-Knotens verbundene Rohre sowie mehrere im Wesentlichen im Betrieb horizontal angeordnete, einen Ring bildende Rohre aufweist, und wobei die Fachwerksstruktur (4) mehrere Fußknoten (12) aufweist, mittels derer die Fachwerksstruktur (4) mit den Pfählen (2) koppelbar ist, **dadurch gekennzeichnet, dass** ein Fußknoten (12) ein im Betrieb unteres Rohrsegment sowie eine oben an dem Rohrsegment befestigte, vorzugsweise verschweißte Adapterplatte (14) aufweist, welche im Betrieb mittelbar oder unmittelbar mit mindestens einem mittels eines X-Knotens verbundenen Rohr der Fachwerksstruktur (4) koppelbar ist, wobei an der Adapterplatte (14) zwei im Wesentlichen V-förmig zueinander angeordnete Adapterrohre befestigt, vorzugsweise verschweißt sind, wobei jedes Adapterrohr mit einem Rohr der Fachwerksstruktur (4) verbindbar, vorzugsweise verschweißbar ist.

2. Offshore-Tragstruktur (1) nach Anspruch 1, wobei zwischen den beiden V-förmigen Adapterrohren ein Knotenblech zur Versteifung angeordnet, vorzugsweise eingeschweißt ist.

3. Offshore-Tragstruktur (1) nach Anspruch 1 oder 2, wobei die Adapterplatte (14) im Wesentlichen die Form einer Kreisschreibe aufweist, deren Durchmesser vorzugsweise größer ist als der Außendurchmesser des unteren Rohrsegments.

4. Offshore-Tragstruktur (1) nach mindestens einem der vorstehenden Ansprüche, wobei das untere Rohrsegment im Betrieb verbunden, vorzugsweise verschweißt ist mit zwei im Wesentlichen horizontalen Rohren eines unteren Rings.

5. Offshore-Tragstruktur (1) nach Anspruch 4, wobei der Durchmesser des unteren Rohrsegments größer ist als der Durchmesser eines horizontalen Rohres der Fachwerksstruktur (4).

6. Offshore-Tragstruktur (1) nach mindestens einem der vorstehenden Ansprüche, wobei der Fußknoten (12) vollständig mit zwei V-förmig zueinander angeordneten horizontalen Rohren und mit der Adapterplatte (14) und mittels der Adapterplatte (14) mit zwei oberen V-förmigen Adapterrohren und mittels dieser mit zwei X-Rohren verschweißt ist.

7. Offshore-Tragstruktur (1) nach mindestens einem der vorstehenden Ansprüche, wobei sechs Fußknoten (12) mit sechs Pfählen (2) mittels Flanschverbindung oder Schweißverbindung gekoppelt sind.

8. Offshore-Tragstruktur (1) nach mindestens einem der vorstehenden Ansprüche, wobei jedes Fachwerks-Segment sechs horizontale, einen Ring bildende Rohre sowie sechs X-förmige Rohrstrukturen aus jeweils zwei X-förmig zueinander angeordneten Rohren aufweist.

9. Verfahren zum Herstellen einer Offshore-Tragstruktur (1) nach einem der vorstehenden Ansprüche, wobei die Tragstruktur (1) als aus einer Vielzahl von Rohren (3) zusammengesetzten Fachwerksstruktur (4) ausgebildet ist und ein Fußknoten (12) ein unteres Rohrsegment und eine Adapterplatte (14) sowie zwei V-förmig zueinander angeordnete Adapterrohre aufweist, bei dem die Adapterrohre mit ein X-bildenden Rohren der Fachwerksstruktur (4) verschweißt werden.

10. Verfahren nach Anspruch 9, wobei die Adapterplatte (14) mit dem unteren Rohrsegment verschweißt wird.

11. Verfahren nach Anspruch 9 oder Anspruch 10, wobei der Fußknoten (12) mit einem Pfahl mittels Flansch- oder Schweißverbindung verbunden wird.

## Claims

1. Offshore support structure (1) for wind turbines, which can be connected to several, preferably six piles (2) anchored in the seabed, comprising:
a mount for a wind turbine tower,
a truss structure (4) connectable to the piles (2) and composed of a plurality of tubes (3), which can be assembled from a plurality of prefabricated truss segments (6, 8, 10), wherein a segment (6, 8, 10) has a plurality of tubes connected by means of an X-joint and a plurality of tubes arranged essentially horizontally in operation and forming a ring, and wherein the truss structure (4) has a plurality of foot joints (12) by means of which the truss structure (4) can be coupled to the piles (2), **characterized in that** a foot node (12) has a lower pipe segment in operation and an adapter plate (14) fastened at the top of the pipe segment, preferably by welding, which, during operation, can be coupled directly or indirectly to at least one pipe of the truss structure (4) connected by means of an X-joint, wherein two adapter pipes arranged substantially V-shaped relative to each other are fastened, preferably welded, to the adapter plate (14), wherein each adapter pipe can be connected, preferably welded, to a pipe of the truss structure (4).

2. Offshore support structure (1) according to claim 1, wherein a gusset plate is arranged, preferably welded, between the two V-shaped adapter tubes for stiffening purposes.

3. Offshore support structure (1) according to claim 1 or 2, wherein the adapter plate (14) essentially has the shape of a circular disc whose diameter is preferably greater than the outer diameter of the lower pipe segment.

4. Offshore support structure (1) according to at least one of the preceding claims, wherein the lower pipe segment is connected, preferably welded, in operation to two substantially horizontal pipes of a lower ring.

5. Offshore support structure (1) according to claim 4, wherein the diameter of the lower pipe segment is greater than the diameter of a horizontal pipe of the truss structure (4).

6. Offshore support structure (1) according to at least one of the preceding claims, wherein the foot node (12) is completely welded to two horizontal pipes arranged in a V-shape relative to each other and to the adapter plate (14) and, by means of the adapter plate (14), to two upper V-shaped adapter pipes and, by means of these, to two X-shaped pipes.

7. Offshore support structure (1) according to at least one of the preceding claims, wherein six foot nodes (12) are coupled to six piles (2) by means of flange connections or welded connections.

8. Offshore support structure (1) according to at least one of the preceding claims, wherein each truss segment comprises six horizontal pipes forming a ring and six X-shaped pipe structures, each comprising two pipes arranged in an X-shape relative to each other.

9. Method for manufacturing an offshore support structure (1) according to one of the preceding claims, wherein the support structure (1) is designed as a truss structure (4) composed of a plurality of tubes (3) and a foot node (12) has a lower tube segment and an adapter plate (14) as well as two adapter tubes arranged in a V-shape relative to each other, wherein the adapter pipes are welded to pipes of the truss structure (4) forming an X.

10. Method according to claim 9, wherein the adapter plate (14) is welded to the lower pipe segment.

11. Method according to claim 9 or claim 10, wherein the foot node (12) is connected to a post by means of a flange or welded connection.

## Revendications

1. Structure porteuse offshore (1) pour éoliennes, pouvant être reliée à plusieurs, de préférence six pieux (2) pouvant être ancrés dans le fond marin, comprenant :
un logement pour une tour d'éolienne,
une structure en treillis (4) pouvant être reliée aux pieux (2), composée d'une multitude de tubes (3) et pouvant être assemblée à partir de plusieurs segments de treillis préfabriqués (6, 8, 10), un segment (6, 8, 10) comportant plusieurs tubes reliés au moyen d'un nœud en X ainsi que plusieurs tubes disposés essentiellement à l'horizontale en service tubes formant un anneau, et la structure en treillis (4) comportant plusieurs nœuds de pied (12) au moyen desquels la structure en treillis (4) peut être couplée aux pieux (2), **caractérisée en ce qu'un** nœud de pied (12) comporte un segment de tube inférieur en service ainsi qu'une plaque d'adaptation (14) fixée en haut sur le segment de tube, de préférence soudée, de préférence soudée, qui peut être couplée, en service, directement ou indirectement à au moins un tube de la structure en treillis (4) relié au moyen d'un nœud en X, deux tubes adaptateurs disposés essentiellement en V l'un par rapport à l'autre étant fixés, de préférence soudés, chaque tube adaptateur pouvant être relié, de préférence par soudage, à un tube de la structure en treillis (4).

2. Structure porteuse offshore (1) selon la revendication 1, dans laquelle une gousset est disposée, de préférence soudée, entre les deux tubes adaptateurs en forme de V à des fins de renforcement.

3. Structure porteuse offshore (1) selon la revendication 1 ou 2, dans laquelle la plaque d'adaptation (14) présente essentiellement la forme d'un disque circulaire dont le diamètre est de préférence supérieur au diamètre extérieur du segment de tube inférieur.

4. Structure porteuse offshore (1) selon au moins l'une des revendications précédentes, dans laquelle le segment tubulaire inférieur est relié, de préférence soudé, en service à deux tubes essentiellement horizontaux d'un anneau inférieur.

5. Structure porteuse offshore (1) selon la revendication 4, dans laquelle le diamètre du segment tubulaire inférieur est supérieur au diamètre d'un tube horizontal de la structure en treillis (4).

6. Structure porteuse offshore (1) selon au moins l'une des revendications précédentes, dans laquelle le nœud de pied (12) est soudé complètement à deux tubes horizontaux disposés en V l'un par rapport à l'autre et à la plaque d'adaptation (14) et, au moyen de la plaque d'adaptation (14), à deux tubes d'adaptation supérieurs en V et, au moyen de ceux-ci, à deux tubes en X.

7. Structure porteuse offshore (1) selon au moins l'une des revendications précédentes, dans laquelle six nœuds de pied (12) sont couplés à six pieux (2) au moyen d'une liaison à bride ou d'une liaison soudée.

8. Structure porteuse offshore (1) selon au moins l'une des revendications précédentes, chaque segment de treillis comportant six tubes horizontaux formant un anneau ainsi que six structures tubulaires en forme de X composées chacune de deux tubes disposés en X l'un par rapport à l'autre.

9. Procédé de fabrication d'une structure porteuse offshore (1) selon l'une des revendications précédentes, la structure porteuse (1) étant conçue comme une structure en treillis (4) composée d'une multitude de tubes (3) et un nœud de pied (12) comportant un segment de tube inférieur et une plaque d'adaptation (14) ainsi que deux tubes d'adaptation disposés en V l'un par rapport à l'autre, dans laquelle les tubes adaptateurs sont soudés à des tubes formant un X de la structure en treillis (4).

10. Procédé selon la revendication 9, dans lequel la plaque d'adaptation (14) est soudée au segment de tube inférieur.

11. Procédé selon la revendication 9 ou 10, dans lequel le noeud de pied (12) est relié à un poteau au moyen d'une liaison à bride ou soudée.
